# EUROPÄISCHE PATENTSCHRIFT

(11) **EP 0 379 697 B1**
(45) Veröffentlichungstag und Bekanntmachung des Hinweises auf die Patenterteilung: **28.06.1995**
(21) Anmeldenummer: 89123233.2
(22) Anmeldetag: 15.12.1989
(51) Int. Cl.: F15B 11/05, G05D 7/01, F03C 1/16

(54) **Hydrostatischer Antrieb**
Hydrostatic drive
Entraînement hydrostatique

(30) Priorität: 25.01.1989 DE 3902139
(43) Veröffentlichungstag der Anmeldung: 01.08.1990
(73) Patentinhaber: ROBERT BOSCH GMBH, 70442 Stuttgart (DE)
(72) Erfinder: Rustige, Hayno, Dipl.-Ing., D-7163 Oberrot/Ebersberg (DE)

(56) Entgegenhaltungen:
- EP-A- 0 291 703
- EP-A- 0 293 585
- EP-A- 0 342 346
- WO-A-89/02515
- NL-A- 8 301 136

## Beschreibung

### Stand der Technik

Die Erfindung geht aus von einem hydrostatischen Antrieb nach dem Oberbegriff des Anspruchs 1. Bei einem aus der EP-A-0 291 703 bekannten derartigen hydrostatischen Antrieb ist das Steuerventil dem vollen Pumpendruck ausgesetzt - der 150 bar oder mehr betragen kann - was einen sehr starken Elektromagneten für die Betätigung des Steuerventils erfordert. Hierdurch wird das Steuerventil sehr aufwendig und erfordert einen Verhältnismäßig großen Bauraum.

### Vorteile der Erfindung

Der erfindungsgemäße hydrostatische Antrieb mit den kennzeichnenden Merkmalen des Anspruchs 1 hat demgegenüber den Vorteil, daß das Steuerventil nur mit einem verhältnismäßig geringen Differenzdruck beaufschlagt ist, so daß der Magnet wesentlich kleiner gebaut werden kann. Das spart Einbauraum und Kosten.

Weitere Vorteile der Erfindung ergeben sich aus den Unteransprüchen und der Beschreibung.

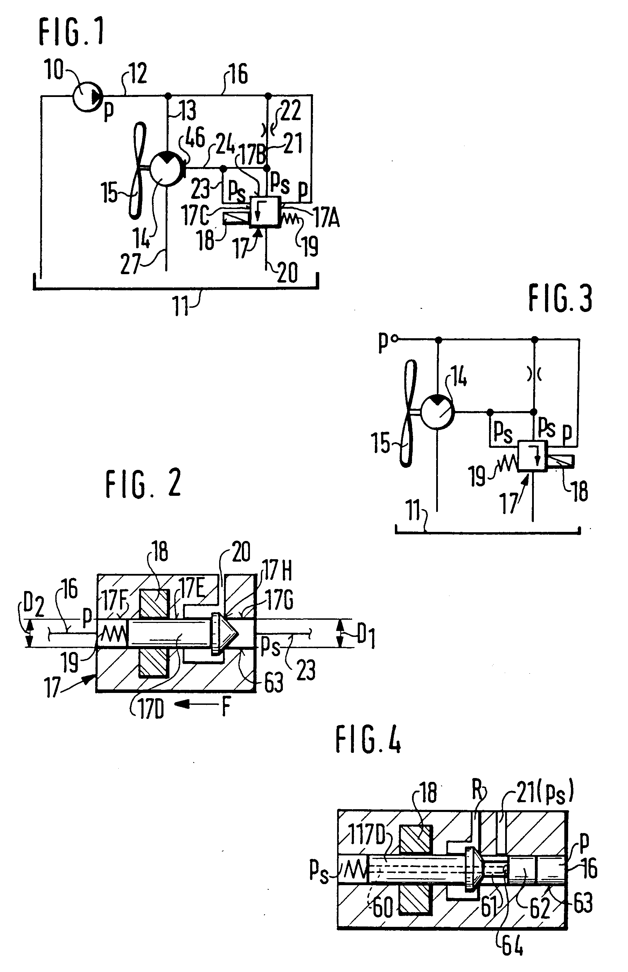

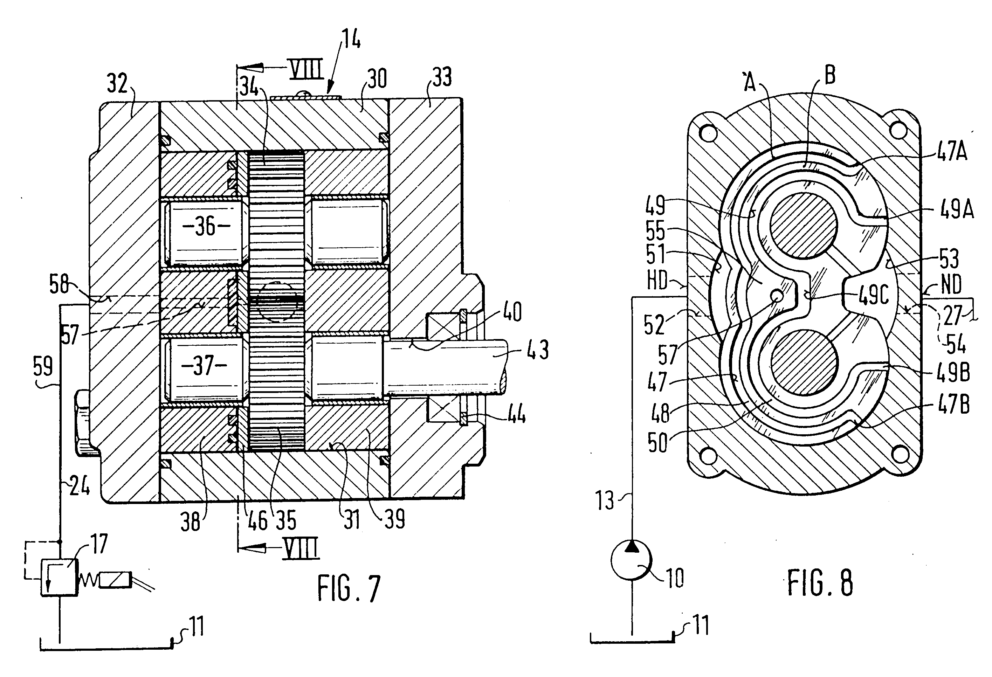

Drei Ausführungsbeispiele der Erfindung sind in der nachfolgenden Beschreibung und Zeichnung erläutert. Letztere zeigt in den Figuren 1, 3 und 5 in schematischer Darstellung hydrostatische Antriebe für den Lüfter einer Brennkraftmaschine, in den Figuren 2, 4 und 6 die zugehörigen Steuerventile, in Figur 7 einen Längsschnitt durch einen Zahnradmotor, in Figur 8 einen Schnitt längs VIII-VIII nach Figur 7, in der Figur 9 den hydrostatischen Antrieb nach den Figuren 1, 3 und 5 mit einer Zusatzeinrichtung in stark Vereinfachter Darstellung.

### Beschreibung der Ausführungsbeispiele

In den Figuren 1 bis 6 ist mit 10 eine Konstantpumpe bezeichnet, die Druckmittel aus einem Behälter 11 ansaugt und in eine Leitung 12 fördert. Von dieser führt eine Abzweigleitung 13 zu einem Zahnradmotor 14 mit konstantem Schluckvolumen. Dieser treibt den Lüfter 15 einer Brennkraftmaschine an. An die Leitung 12 schließt sich eine Leitung 16 an, die zur einen Stirnseite 17A eines durch einen Elektromagneten betätigbaren Steuerventils 17 führt. Auf die Stirnseite 17A des Steuerventils 17 wirkt außerdem noch eine Druckfeder 19 ein. Vom Steuerventil 17 führt eine Rückleitung 20 zum Behälter 11. An der dem Anschluß für die Rückleitung 20 entgegengesetzten Stirnseite 17B des Steuerventils 17 mündet eine Leitung 21, die von der Leitung 16 ausgeht. In der Leitung 21 ist eine Drossel 22 angeordnet. Auf die der Stirnseite 17A gegenüberliegende Stirnseite 17C des Steuerventils 17 mündet eine Leitung 23, die von einer Leitung 24 ausgeht, welche von der Leitung 21 zum Zahnradmotor 14 führt. Sie mündet an einem Deckel 32, welcher Teil des Zahnradmotors 14 ist und worauf weiter unten eingegangen ist. Vom Zahnradmotor 14 führt eine Rückleitung 27 zum Behälter 11. Daraus ist zu erkennen, daß es sich bei dem hydrostatischen Getriebe um ein solches handelt, das im offenen Kreis arbeitet.

In Figur 2 ist das Steuerventil 17 im Längsschnitt und etwas vereinfacht dargestellt gezeichnet. Auf den in einer Längsbohrung 17E geführten Ventilkörper 17D, der hier als Sitzventil ausgebildet ist, wirken von der einen Seite her die Druckfeder 19 ein sowie der Förderdruck der Pumpe 10 über die Leitung 16, in entgegengesetzter Richtung der Druck aus der Leitung 23 und der Elektromagnet 18. Dessen Wirkungsrichtung ist durch einen Pfeil F gekennzeichnet.

Im folgenden ist nun auf den Zahnradmotor 14 näher eingegangen. Dieser weist ein Gehäuse 30 auf, dessen Innenraum 31 etwa die Querschnittsform einer acht hat, das beidseitig durch Deckel 32, 33 verschlossen ist. Im Innenraum 31 kämmen zwei Zahnräder 34, 35 im Außeneingriff miteinander, deren Wellen 36, 37 in brillenförmigen Lagerkörpern 38, 39 gelagert sind. Im Deckel 33 ist ein Durchgang 40 ausgebildet, durch welchen eine Verlängerung 43 der Welle 37 nach außen dringt; sie ist dort durch einen Dichtring 44 abgedichtet.

Zwischen dem Lagerkörper 38 und den benachbarten Seitenflächen der Zahnräder 34, 35 ist eine Dichtplatte 46 angeordnet, die ebenfalls die Kontur des Innenraums 11 hat und die gesamte Fläche der Zahnräder 34, 35 überdeckt. An ihrer Rückseite sind zwei Druckfelder wirksam, wie sie nachfolgend beschrieben sind.

Die Figur 8 zeigt unter anderem eine Draufsicht auf den Lagerkörper 38, und zwar von seiner der Dichtplatte 46 zugewandten Stirnseite her. In dieser Stirnseite ist ein nahe der Außenkontur des Lagerkörpers 38 verlaufender erster Nutzug 47 ausgebildet, welcher teilweise konzentrisch zu den Zahnradwellen 36, 37 verläuft, und sich von der Hochdruckseite HD zur Niederdruckseite ND hinzieht, jedoch nicht bis zu dieser verläuft. Der Nutzug 47 endet jeweils in zwei Nutenden 47A, 47B, die bis an den Rand des Lagerkörpers 38 vordringen. In diesem Nutzug 47 ist eine Dichtung 48 aus gummielastischem Werkstoff angeordnet.

Ebenfalls konzentrisch zu den Zahnradwellen 36, 37, aber radial innerhalb des Nutzugs 47 ist ein zweiter Nutzug 49 ausgebildet, der sich ebenfalls von der Hochdruckseite zur Niederdruckseite hin erstreckt, wobei seine Enden 49A, 49B noch weiter zur Niederdruckseite vordringen, als die Nutenden 47a, 47b des Nutzugs 47. Der Nutzug 49 hat außerdem in seinem mittleren Bereich eine Einbuchtung 49C, die etwa bis zu einer die Wellenmitten der Wellen 36, 37 verbindenden gedachten Geraden führt. Im Nutzug 49 ist passend eine Dichtung 50 angeordnet, die ebenfalls aus einem gummielastischen Werkstoff besteht.

Die Hochdruckseite HD ist gekennzeichnet durch eine Ausnehmung 51, in welcher die Hochdruckbohrung 52 vom äußeren des Gehäuses 30 ausgehend eindringt, und zwar in Höhe der Zahnräder 34, 35. Die Niederdruckseite ND ist gekennzeichnet durch eine Ausnehmung 53, in welche eine achsgleich zur Hochdruckbohrung 52 verlaufende Niederdruckbohrung 54 eindringt, die ebenfalls vom äußeren des Gehäuses 30 ausgeht. An der Hochdruckseite HD mündet die Leitung 13.

Wie aus Figur 8 ersichtlich ist, besteht zwischen den Nutzügen 47, 49 ein Zwischenraum, welcher im Bereich 49C ein etwas vergrößertes Feld 55 bildet. Im Lagerkörper 38 verläuft eine Bohrung 57, die mit einer im Deckel 32 ausgebildeten, durchgehenden Bohrung 58 Verbindung hat, an welche die Leitung 24 angeschlossen ist.

Wesentlich beim Betrieb des Zahnradmotors 14 ist, daß dieser beim Anlaufen nur einen geringen Reibungswiderstand zu überwinden hat. Dies gilt insbesondere für die Dichtplatte 46, die beim Anlauf nur mit geringer Kraft an die Zahnradseitenflächen der Zahnräder 34, 35 gedrückt werden soll. Diese Andrückkraft resuliert aus zwei Druckfeldern, nämlich einem sogenannten Vordruckfeld A und einem Hauptdruckfeld B. Das Vordruckfeld A ist begrenzt durch die Dichtung 48 und erstreckt sich im Bereich radial außerhalb dieser Dichtung - also zwischen dieser und der Gehäusewand - sowie im Bereich, welcher unter der Fläche der Dichtung 48 selbst liegt. Das Hauptdruckfeld B ist gebildet durch einen Bereich, der zwischen der Dichtung 48 und der Dichtung 50 liegt - insbesondere auch durch das Feld 55 - und außerdem unter der Fläche der Dichtung 50. Das Vordruckfeld A ist beaufschlagt von der Ausnehmung 51 her - d. h. im Vordruckfeld A herrscht der Förderdruck p der Pumpe 10 - das Hauptdruckfeld B ist von einem Steuerdruck pₛ beaufschlagt, welcher durch das Steuerventil 17 erzeugt wird.

Die Kräfte an der Dichtplatte 46 sind so ausgelegt, daß sie im vollen Betrieb die Dichtplatte 46 mit einer gewissen Überschußkraft an die Zahnradseitenflächen der Zahnräder 34, 35 andrucken, damit kein Druckmittel von der Hochdruckseite HD zur Niederdruckseit ND entlang dieser Zahnradseitenflächen fließen kann, was den Wirkungsgrad des Zahnradmotors 14 stark beeinträchtigen würde. Beim Anlaufen desselben ist es notwendig, diese Überschußkraft zu verringern, damit die Zahnräder 34, 35 leicht anlaufen können. Zu diesem Zweck wird das Druckfeld B entlastet, d. h. mit einem niedrigeren Steuerdruck pₛ als dem Förderdruck der Pumpe 10 beaufschlagt. Die Andrückkraft der Dichtplatte 46 an die Zahnradseitenflächen der Zahnräder 34, 35 ist nun ganz gering oder fast aufgehoben - das richtet sich nach der Bauart des Zahnradmotors 14 - so daß dieser in der Anlaufphase leicht anlaufen kann. Der Steuerdruck pₛ wird entsprechend der Anlaufphase des Zahnradmotors 14 nach und nach durch entsprechendes Schließen des Steuerventils 17 erhöht. Dadurch verbessert sich der volumetrische Wirkungsgrad des Zahnradmotors 14, und seine Drehzahl steigt,bis der Zahnradmotor 14 seine Enddrehzahl erreicht hat. Dann ist das Steuerventil 17 geschlossen,und die Andrückkraft auf die Dichtplatte 46 im Druckfeld. B entspricht nun auch dem Förderdruck p der Pumpe 10 und hat ihren optimalen Wert erreicht. Sie wird ergänzt durch die im Druckfeld A herrschende Kraft. Dieser Vorgang wiederholt sich im übrigen bei jeder neuen Einstellung der Drehzahl des Zahnradmotors 14.

Der Steuerdruck pₛ wird - wie bereits ausgeführt - durch das Steuerventil 17 erzeugt. Bezug ist nun auf die Figuren 1 und 2 genommen. Zum Öffnen des Ventilkörpers 17D ist eine Kraft notwendig, die den Förderdruck p im Bohrungsteil 17F der Bohrung 17E überwinden muß. Damit diese Kraft nicht sehr groß wird, wirkt von dem an die Leitung 23 angeschlossenen Bohrungsteil 17G her der Steuerdruck pₛ auf den Ventilkörper 17d. Solange das Ventil 17 noch geschlossen ist, herrscht sowohl in der Leitung 16 wie auch in der Leitung 23 derselbe Druck. Sobald der Elektromagnet 18 erregt wird, wird der Ventilkörper 17D etwas von seinem Ventilsitz 17H abgehoben, worauf Druckmittel über die Drossel 22 und über das Steuerventil 17 zu fließen beginnt, so daß an der Drossel 22 ein Druckabfall erzeugt wird. Je nach Öffnungsweite des Ventilkörpers 17D wird nun in der Leitung 24 der gewünschte Steuerdruck pₛ erzeugt, welcher die Dichtplatte 46 in dichtende Berührung mit den Zahnradseitenflächen der Zahnräder 34, 35 bringt, wobei die Überschußkraft, wie oben ausgeführt, noch relativ klein ist, so daß die Zahnräder 34, 35 gut anlaufen können. Der Elektromagnet 18 braucht also nur die Kraft der Feder 19 und die auf den Ventilkörper 17D einwirkende Druckdifferenz zu überwinden - sie beträgt zweckmäßigerweise nicht mehr als 40 bar - wodurch der Elektromagnet 18 verhältnismäßig klein ausgelegt werden kann. Wenn dies nicht so wäre, müßte der Elektromagnet 18 den Ventilkörper 17D gegen vollen Förderdruck der Pumpe 10 anheben, wodurch er entsprechend groß dimensioniert sein müßte. Dies wird hier nun also vermieden. Eine weitere Steuerung dieser Kraft ist dadurch möglich, daß der Durchmesser D₁ am Ventilsitz 17H etwas größer gemacht wird als der Durchmesser D₂ der Bohrung 17F am Ventilschaft. Je nach gewünschter Gebläsedrehzahl wird nun der Ventilkörper 17D mehr oder weniger weit geöffnet, so daß der Steuerdruck pₛ durch Abströmen über den Ventilkörper 17d in die Rückleitung 20 entsprechend variiert werden kann. Wenn der Zahnradmotor 14 seine volle Drehzahl erreicht hat, ist es notwendig, daß die Dichtplatte 46 genügend angedrückt wird, damit kein Druckmittel entlang der Zahnradseitenflächen der Zahnräder 34, 35 von der Hochdruckseite HD zur Niederdruckseite ND fließen kann. Der Magnet 18 ist nun entregt, so daß der auf den Ventilschaft über die Leitung 16 übertragene Förderdruck der Pumpe 10 das Ventil 17 schließt. Nun kann über dieses kein Druckmittel mehr abfließen, so daß der Druck hinter der Drossel 22 wieder den Förderdruck der Pumpe 10 annimmt. Dieser wirkt nun über die Leitung 24 voll auf die Dichtplatte 46. Der Zahnradmotor 14 hat seine Nenndrehzahl erreicht.

Das Ausführungsbeispiel nach den Figuren 3 und 4 zeigt eine Variante des Steuerventils 17. Hier wirkt der Elektromagnet 18 von der entgegengesetzten Seite wie zuvor auf den Ventilkörper ein, dasselbe gilt für die Druckfeder 19. Konstruktiv wirkt sich das so aus, daß nun der Ventilkörper - bezeichnet mit 117D - eine mittige durchgehende Bohrung 60 aufweist und außerdem an seinem Schließteil einen zylindrischen Fortsatz 61 hat, der sich gegen ein Kölbchen 62 legt, welches in der Bohrung 63 für den Ventilkörper 117d dicht gleitend geführt ist. An der Stirnfläche des Fortsatzes 61 ist eine mit der Längsbohrung 60 in Verbindung stehende Drosselkerbe 64 ausgebildet. Wenn der Elektromagnet 18 noch nicht erregt ist, d. h. das Ventil 17 geschlossen ist, herrscht in der Längsbohrung 60 des Ventilkörpers 117d wieder der Pumpendruck. Dieser pflanzt sich über die Drosselkerbe 64 in die Leitung 21 fort. Zum Anfahren des Zahnradmotors 14 ist es wiederum erforderlich, das Ventil 17 zu öffnen, und zwar durch Erregen des Elektromagneten 18. Nun hebt sich der Ventilkörper 117d vom Ventilsitz ab und stellt eine Drosselverbindung zur Rücklaufleitung 20 her, wodurch der Druck in der Leitung 21 abfällt. Dadurch wird das Druckfeld 55 an der Dichtplatte 26 wieder beaufschlagt, so wie oben beschrieben. Der Durchmesser der Bohrung 17E ist hier durchweg gleich.

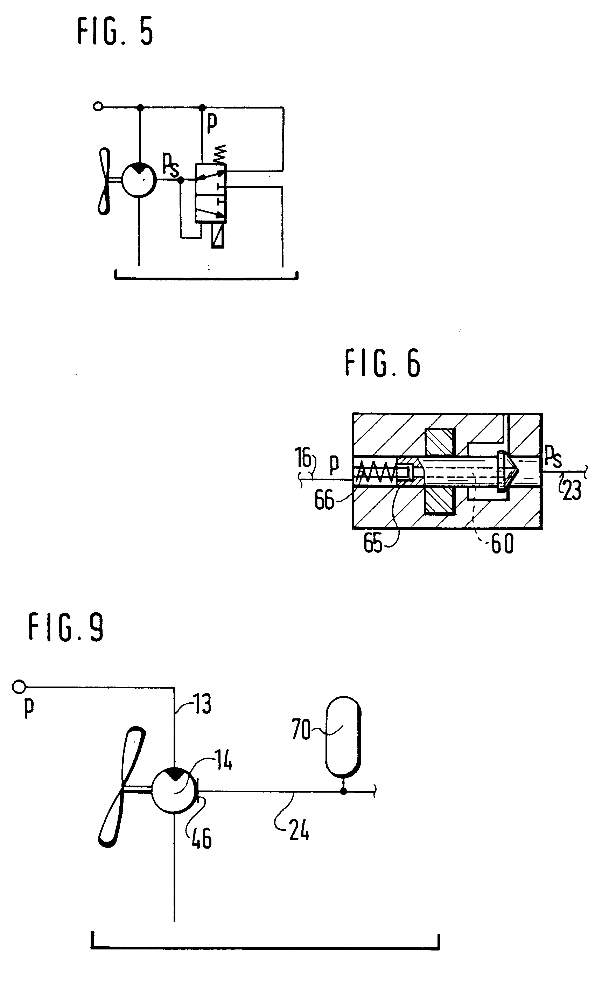

Das Ausführungsbeispiel nach den Figuren 5 und 6 zeigt wiederum eine Variante des Steuerventils 17 nach den Figuren 1 und 2. Hier herrscht nun auf der linken Seite der Pumpenhochdruck. An der dem Ventilkörper gegenüberliegenden Seite ist im Schaft eine Ausnehmung 65 ausgebildet, in welche ein Stift 66 ragt, der gegenüber der durchgehenden Bohrung 60 einen Drosselquerschnitt bildet. Auf diese Weise kann vor dem Anfahren des Zahnradmotors 14 nur eine geringe Druckmittelmenge durch die Längsbohrung 60 fließen.

Die Drossel 22 hat den Zweck, daß beim Anlaufen des Zahnradmotors 14 nur eine geringe Druckmittelmenge aus der Förderleitung 21 über das Steuerventil 17 abfließen kann.

Wie die Figur 9 zeigt, ist in einer Abwandlung des Obigen Ausführungsbeispiels an die Steuerleitung 24 ein Druckspeicher 70 beliebiger Bauart angeschlossen. Man erreicht damit ein sicheres Anlaufen des Zahnradmotors 14 auch bei niedrigen Drücken der Pumpe 10.

## Patentansprüche

1. Hydrostatischer Antrieb mit einem von einer Pumpe (10) mit Druckmittel versorgten Zahnradmotor (14) zum Antrieb eines Gebläses, der im Außeneingriff kämmende Zähnräder (34, 35) hat, an deren Seitenflächen sich mindestens auf einer Seite ein von einem gegenüber dem Zulaufdruck der Pumpe (10) reduzierter Steuerdruck (pₛ) beaufschlagte Dichtplatte (46) anliegt, der von einem elektromagnetisch betätigbaren Ventil (17) erzeugt wird, dadurch gekennzeichnet, daß auf das Ventil (17) von der einen Seite her der Druck (p) der Pumpe (10) einwirkt, von der entgegengesetzten Seite her der Steuerdruck (pₛ), sowie in derselben Wirkungslinie wie zuvor ein Elektromagnet (18) und diesem entgegen eine Reglerfeder (19).

2. Antrieb nach Anspruch 1, dadurch gekennzeichnet, daß die vom Steuerdruck (pₛ) beaufschlagte Fläche am Ventilkörper (17d) größer ist als die vom Förderdruck der Pumpe (10) beaufschlagte Fläche und daß die Reglerfeder (19) auf letztere Fläche einwirkt, der Elektromagnet (18) in der entgegengesetzten Richtung.

3. Antrieb nach Anspruch 1, dadurch gekennzeichnet, daß in der Zuleitung (12, 16, 21) von der Pumpe (10) zum Steuerventil (17) eine Drossel (22) angeordnet ist.

4. Antrieb nach Anspruch 1, dadurch gekennzeichnet, daß im Ventilkörper (117D) eine durchgehende Längsbohrung (60) ausgebildet ist, die zusammen mit einem sich unter Pumpenförderdruck gegen den Ventilkörper (117d) legenden Kölbchen (62) eine Drossel (64) bildet.

5. Antrieb nach einem der Ansprüche 1 bis 4, dadurch gekennzeichnet, daß das Gebläse der Lüfter (15) einer Brennkraftmaschine ist.

6. Antrieb nach einem der Ansprüche 1 bis 5, dadurch gekennzeichnet, daß an die den Steuerdruck (pₛ) führende Leitung (24) ein Druckspeicher (70) beliebiger Bauart angeschlossen ist.

## Claims

1. Hydrostatic drive with a gear motor (14), supplied with pressure medium by a pump (10), for driving a blower which has gear wheels (34, 35) which intermesh externally and on whose side faces, at least on one side, a sealing plate (46) bears which is acted on by a control pressure (pₛ) which is reduced in comparison with the inflow pressure of the pump (10) and is produced by an electromagnetically actuable valve (17), characterized in that the pressure (p) of the pump (10) acts on the valve (17) from one side and from the opposite side the control pressure (pₛ) acts and in the same line of action as before an electromagnet (18) acts, and this is counteracted by a controller spring (19).

2. Drive according to Claim 1, characterized in that the surface on the valve body (17d) which is acted on by the control pressure (pₛ) is larger than the surface which is acted on by the delivery pressure of the pump (10), and in that the controller spring (19) acts on the latter surface and the electromagnet (18) acts in the opposing direction.

3. Drive according to Claim 1, characterized in that a throttle (22) is arranged in the feedline (12, 16, 21) from the pump (10) to the control valve (17).

4. Drive according to Claim 1, characterized in that a continuous longitudinal hole (60) is formed in the valve body (117D), which hole forms, together with a small piston (62) which bears against the valve body (117d) under pump delivery pressure, a throttle (64).

5. Drive according to one of claims 1 to 4, characterized in that the blower is the fan (15) of an internal combustion engine.

6. Drive according to one of Claims 1 to 5, characterized in that a pressure accumulator (70) of any design is connected to the line (24) which conducts the control pressure (pₛ).

## Revendications

1. Entraînement hydrostatique, avec un moteur à roues dentées d'engrenages (14), alimenté par une pompe (10) en fluide sous pression qui sert à entraîner un ventilateur et qui a des roues dentées (34, 35) engrenant l'une dans l'autre en venant en prise par l'extérieur, roues dentées sur les faces latérales desquelles s'applique au moins sur un côté une plaque d'étanchéité (46) sollicitée par une pression de commande (pₛ) réduite par rapport à la pression d'admission de la pompe (10), pression qui est produit par une vanne (17) qui peut être actionnée de façon électromagnétique, entraînement hydrostatique caractérisé en ce que, sur la vanne (17), agit à partir d'un des côtés la pression (p) de la pompe (10), à partir du côté opposé la pression de commande (pₛ), ainsi que dans la même ligne d'action qu'auparavant un électro-aimant (18) et à l'opposé de celui-ci un ressort de régulateur (19).

2. Entraînement selon la revendication 1, caractérisé en ce que la face actionnée par la pression de commande (pₛ) est plus grande sur le corps de vanne (17D) que la face actionnée par la pression de refoulement de la pompe (10) et en ce que le ressort de régulateur (19) agit sur cette dernière face, l'électro-aimant (18) dans le sens opposé.

3. Entraînement selon la revendication 1, caractérisé en ce que dans la conduite (12, 16, 21) qui va de la pompe (10) à la vanne de commande (17), est disposé un étranglement (22).

4. Entraînement selon la revendication 1, caractérisé en ce que, dans le corps de la vanne (117D), est constitué un alésage longitudinal qui va d'un bout à l'autre, alésage qui, en même temps qu'un petit piston (62) se mettant sous la pression de refoulement de la pompe contre le corps de la vanne (117D), forme un étranglement (64).

5. Entraînement selon l'une des revendications 1 à 4, caractérisé en ce que la soufflante est le ventilateur (15) d'un moteur à combustion interne.

6. Entraînement selon l'une des revendications 1 à 5, caractérisé en ce que, à la conduite (24) faisant passer la pression de commande (pₛ) est raccordé un accumulateur de pression (70) de n'importe quel type de construction.
